# EUROPÄISCHE PATENTSCHRIFT

(11) **EP 1 664 606 B1**
(45) Veröffentlichungstag und Bekanntmachung des Hinweises auf die Patenterteilung: **15.10.2008**
(21) Anmeldenummer: 04764275.6
(22) Anmeldetag: 19.08.2004
(51) Int. Cl.: F16L 3/08, H02G 3/30, F16B 21/07, F16B 21/16, F16B 5/06

(54) **VORRICHTUNG ZUM BEFESTIGEN WENIGSTENS EINES LÄNGLICHEN GEGENSTANDES AN EINEM GRUNDTEIL**
DEVICE FOR FASTENING AT LEAST ONE ELONGATE OBJECT TO A BASE
DISPOSITIF POUR FIXER AU MOINS UN OBJET ALLONGE SUR UNE PIECE DE BASE

(30) Priorität: 16.09.2003 DE 10342729
(43) Veröffentlichungstag der Anmeldung: 07.06.2006
(73) Patentinhaber: A. RAYMOND ET CIE, 38000 Grenoble (FR)
(72) Erfinder: KURTH, Martin, 79576 Weil am Rhein - Ötlingen (DE); TREMMEL, Günter, 79739 Schwörstadt (DE)
(74) Vertreter: Rüttgers, Joachim
(86) Internationale Anmeldenummer: PCT/EP2004/009291
(87) Internationale Veröffentlichungsnummer: WO 2005/036041

(56) Entgegenhaltungen:
- EP-A- 0 967 702
- DE-U- 8 513 784
- GB-A- 2 154 648
- GB-A- 2 243 399
- US-A- 5 040 752

## Beschreibung

Die Erfindung betrifft eine Vorrichtung zum Befestigen wenigstens eines länglichen Gegenstandes an einem Grundteil über wenigstens zwei mit dem Grundteil verbundene Befestigungselemente mit einem Trägerteil zur Aufnahme des oder jedes Gegenstandes, mit einer Verbindungseinheit, die über ein mit dem Trägerteil verbundenes feststehendes Führungsteil und ein mit dem Führungsteil verschiebbar in Eingriff stehendes sowie mit einem Befestigungselement in Eingriff bringbares Aufnahmeteil verfügt, und mit einer weiteren Verbindungseinheit, die mit einem weiteren Befestigungselement in Eingriff bringbar ist.

Eine derartige Vorrichtung ist aus DE 8513 784 U bekannt. Bei der vorbekannten Vorrichtung sind als Leitungsdrähte ausgebildete längliche Gegenstände mittels Bändern an einer länglichen Schiene als Trägerteil befestigbar. Die vorbekannte Vorrichtung verfügt über eine erste Verbindungseinheit, die ein mit dem Trägerteil verbundenes feststehendes Führungsteil aufweist. Das Führungsteil der vorbekannten Vorrichtung weist einen mit einem Kopf ausgebildeten Stift auf. Der im Durchmesser gegenüber einem Schaftabschnitt des Stiftes im Querschnitt größere Kopf wird von einer mit einem Aufnahmeteil für ein Befestigungselement verbundenen länglichen Schiene hintergriffen. Die Schiene ist durch den Stift geführt, so dass das Aufnahmeteil gegenüber dem Führungsteil verschiebbar ist.

Zwar ist die vorbekannte Vorrichtung leicht zu befestigen, und die Verschiebbarkeit des Aufnahmeteils gestattet es, Abstandabweichungen zwischen den Befestigungselementen zu korrigieren, allerdings ist der Aufbau der betreffenden Verbindungseinheit verhältnismäßig raumgreifend und die Herstellung relativ teuer.

Der Erfindung liegt die Aufgabe zugrunde, eine Vorrichtung der eingangs genannten Art anzugeben, die verhältnismäßig kompakt aufgebaut und günstig herzustellen ist.

Diese Aufgabe wird bei einer Vorrichtung der eingangs genannten Art erfindungsgemäß dadurch gelöst, dass das Führungsteil mit einer einen Führungshohlraum umschließenden Außenhülse ausgebildet ist, wobei der Führungshohlraum einen Querschnitt aufweist, der in einer Längsrichtung größer als in einer Querrichtung ist, dass das Aufnahmeteil über eine in dem Führungshohlraum verschiebbare Innenhülse verfügt, deren Durchmesser in Längsrichtung kleiner als der Durchmesser der Außenhülse in Längsrichtung ist, und dass zwischen Wandungen des Führungsteils und Wandungen des Aufnahmeteils Eingriffselemente ausgebildet sind, die miteinander in Eingriff stehen.

Durch den Aufbau der erfindungsgemäßen Vorrichtung ist das Aufnahmeteil platzsparend innerhalb des Führungsteils angeordnet und über die Eingriffselemente in dem Führungshohlraum direkt über das Führungsteil geführt. Dadurch ist die Vorrichtung auch bei beengten Einbaubedingungen einsetzbar und kostengünstig herstellbar.

Bei einer Ausgestaltung einer erfindungsgemäßen Vorrichtung ist zweckmäßigerweise vorgesehen, dass die Eingriffselemente durch Führungsausnehmungen und Führungsvorsprünge gebildet sind, die sich in Längsrichtung erstrecken.

Um ein möglichst einfaches Einführen des Aufnahmeteils in das Führungsteil zu erzielen, ist bei einer Weiterbildung der vorgenannten Ausgestaltung vorgesehen, dass die Führungsvorsprünge an Wandungen des Führungsteils und die Führungsausnehmungen an Wandungen des Aufnahmeteils ausgebildet sind.

Um ein unbeabsichtigtes Herausziehen des Aufnahmeteils aus dem Führungsteil möglichst zu verhindern, weisen die Führungsvorsprünge bei der vorgenannten Ausgestaltung beziehungsweise der zugehörigen Weiterbildung vorteilhafterweise einen dreieckigen Querschnitt auf, wobei eine in Aufsteckrichtung auf ein Befestigungselement dem Befestigungselement zugewandte Seite steiler als gegen die in Aufsteckrichtung dem Befestigungselement abgewandte Seite angestellt sind.

Um bei einer erfindungsgemäßen Vorrichtung eine gute Verbindung mit einem Befestigungselement zu erzielen, umschließt bei einer zweckmäßigen Ausgestaltung das Aufnahmeteil einen durchgehenden Aufnahmekanal und ist mit nach innen weisenden Rastnasen ausgebildet.

Bei einer weiteren zweckmäßigen Ausgestaltung einer erfindungsgemäßen Vorrichtung ist für einen besonders guten Abstandausgleich vorgesehen, dass die weitere Verbindungseinheit entsprechend der ein verschiebbares Aufnahmeteil aufweisenden Verbindungseinheit ausgebildet ist, wobei die Längsrichtungen der Aufnahmeteile rechtwinklig zueinander ausgerichtet sind. Dadurch lässt sich diese Ausgestaltung besonders gut justieren.

Weitere zweckmäßige Ausgestaltungen und Vorteile der Erfindung sind Gegenstand der nachfolgenden Beschreibung eines Ausführungsbeispiels unter Bezug auf die Figuren der Zeichnung. Es zeigen:
- Fig. 1: in einer dreidimensionalen Ansicht ein Ausführungsbeispiel der Erfindung mit einer ein verschiebbares Führungsteil aufweisenden Verbindungseinheit und einer weiteren feststehenden Verbindungseinheit,
- Fig. 2: in einer gegenüber der Darstellung gemäß Fig. 1 vergrößerten dreidimensionalen Ansicht die das verschiebbare Führungsteil aufweisende Verbindungseinheit,
- Fig. 3: in einem Schnitt in Längsrichtung die Verbindungseinheit gemäß Fig. 2 und
- Fig. 4: in einem Schnitt in Querrichtung die Verbindungseinheit gemäß Fig. 2.

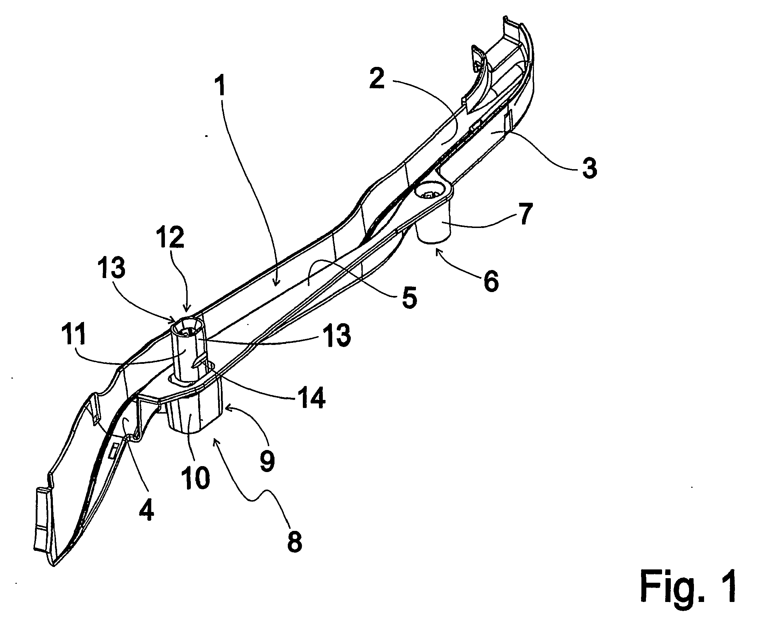

Fig. 1 zeigt in einer dreidimensionalen Ansicht ein Ausführungsbeispiel einer aus Kunststoff gefertigten erfindungsgemäßen Vorrichtung mit einem Trägerteil, das als ein länglicher Kabelkanal 1 ausgebildet ist. Der Kabelkanal 1 weist für einen an einem in Fig. 1 nicht dargestellten Grundteil zu befestigenden länglichen Gegenstand zwei einander gegenüberliegende Seitenwände 2, 3 und eine Bodenwand 4 auf, die mit den Seitenwänden 2, 3 in Verbindung steht. Der der Bodenwand 4 gegenüberliegende Bereich des Kabelkanals 1 ist offen ausgebildet, so dass der zu befestigende Gegenstand, beispielsweise ein Kabel, ein Kabelbündel mit mehreren Kabeln, ein Schlauch oder ein Schlauchbündel mit mehreren Schläuchen, zwischen die Seitenwände 2, 3 einfügbar ist. Bei bestimmungsgemäßer Anordnung des Kabelkanals 1 an einem Grundteil ist die offene Seite des Kabelkanals 1 dem Grundteil zugewandt und durch dieses im wesentlichen abgedeckt.

An der in der Darstellung gemäß Fig. 1 dem Betrachter zugewandten Seitenwand 3 ist an der der Bodenwand 4 abgewandten Randseite ein Steg 5 ausgebildet, der in etwa rechtwinklig zu der Seitenwand 3 ausgerichtet ist und von dieser nach außen absteht. Der Steg 5 erstreckt sich über eine gewisse Länge des Kabelkanals 1, beispielsweise über etwa zwei Drittel der Länge eines im wesentlichen geraden Abschnittes.

An einem Endbereich des Steges 5 ist eine erste Verbindungseinheit 6 vorhanden, die als eine feststehende, sich von dem Steg 5 in Richtung der Bodenwand 4 im wesentlichen parallel zu der Seitenwand 3 erstreckende und mit der Bodenwand 4 abschließende Festhülse 7 ausgebildet ist. Die Festhülse 7 weist einen rundlichen Querschnitt auf und ist auf ein mit dem Grundteil verbundenes, typischerweise als mit dem Grundteil verschweißter Gewindebolzen ausgeführtes Befestigungselement aufsteckbar.

Weiterhin ist an dem anderen Endbereich des Steges 5 eine zweite Verbindungseinheit 8 vorhanden. Die zweite Verbindungseinheit 8 weist ein mit dem Steg 5 verbundenes Führungsteil 9 auf, das mit einer Außenhülse 10 ausgebildet ist. Die zweite Verbindungseinheit 8 ist weiterhin mit einem eine Innenhülse 11 aufweisenden Aufnahmeteil 12 ausgestattet, die in der Darstellung gemäß Fig. 1 unmittelbar nach der Herstellung der erfindungsgemäßen Vorrichtung noch über den Steg 5 vorstehend über einen Verbindungsgrat mit der Außenhülse 10 verbunden ist. Die Außenwand der Innenhülse 11 ist mit einander gegenüberliegenden Flachabschnitten 13 ausgebildet, in die jeweils eine Führungsausnehmung 14 eingebracht ist.

Zum Einnehmen der zum Befestigen an dem Grundteil erforderlichen bestimmungsgemäßen Anordnung des zweiten Aufnahmeteils 8 wird die Innenhülse 11 mit einem Spezialwerkzeug unter Zerstörung des Verbindungsgrates in die Außenhülse 10 eingeführt.

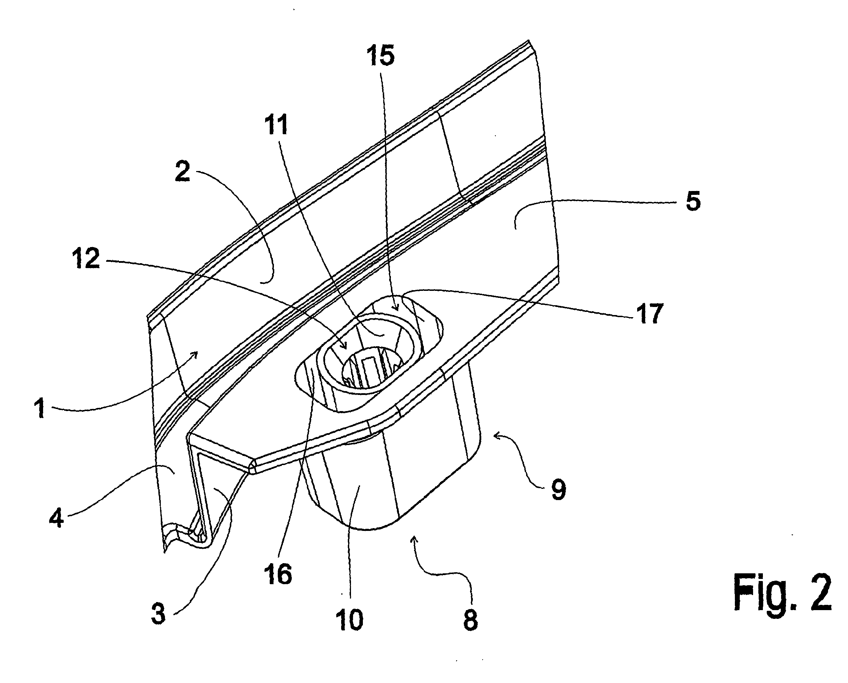

Fig. 2 zeigt in einer gegenüber der Darstellung gemäß Fig. 1 vergrößerten dreidimensionalen Ansicht die das verschiebbare Führungsteil 8 aufweisende zweite Verbiridungseinheit 8 mit der nunmehr in die Außenhülse 10 eingeführten Innenhülse 11. Aus Fig. 2 ist ersichtlich, dass ein Führungshohlraum 15 der Außenhülse 10 in einer bei dem dargestellten Ausführungsbeispiel in etwa der Erstreckung des Steges 5 folgenden Längsrichtung einen Querschnitt aufweist, der größer ist als in einer hierzu rechtwinklig ausgerichteten Querrichtung ist. Bei dem Ausführungsbeispiel gemäß Fig. 2 ist der Querschnitt in etwa rechteckig mit relativ stark abgerundeten Eckbereichen ausgebildet.

Weiterhin ist Fig. 2 zu entnehmen, dass die Innenhülse 11 mit den an ihrer Außenwand ausgebildeten Flachabschnitten 13 an ebenfalls flachen Längsabschnitten 16 der Innenwand der Außenhülse 10 anliegt, so dass die Innenhülse 11 gegenüber der Außenhülse 10 in Längsrichtung der Führungsausnehmung 14 durch die Längsabschnitte 16 geführt zwischen in Querrichtung des Führungshohlraums 15 liegenden und als Randanschläge dienenden Querabschnitten 17 verschiebbar ist.

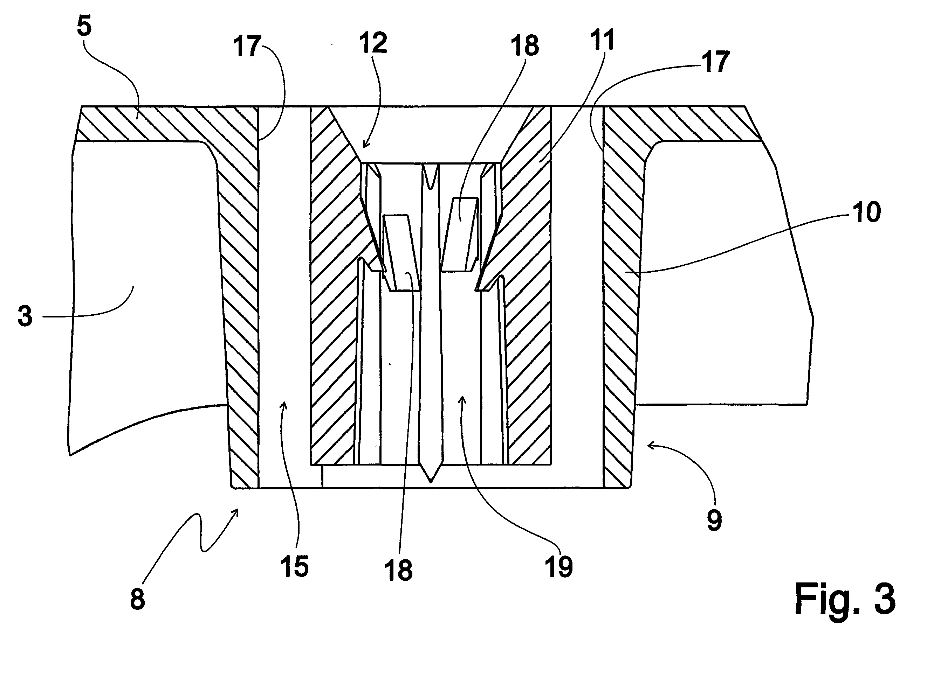

Fig. 3 zeigt in einem Schnitt in Längsrichtung des Führungshohlraums 15 die zweite Verbindungseinheit 8 gemäß Fig. 3. Aus Fig. 3 ist ersichtlich, dass auf der Innenseite der Innenhülse 11 eine Anzahl von Rastnasen 18 ausgebildet sind, die zu einer in der Darstellung gemäß Fig. 3 oben liegenden Aufsteckseite angestellt sind. Bei Aufstecken der zweiten Verbindungseinheit 8 auf ein beispielsweise als Gewindebolzen ausgebildetes Befestigungselement verrasten die Rastnasen 18 mit den ihnen zugeordneten Ausnehmungen des Befestigungselementes und sichern die erfindungsgemäße Vorrichtung aufgrund des hohen Auszugswiderstandes gegen ein unbeabsichtigtes Lösen von dem Grundteil.

Weiterhin ist Fig. 3 besonders klar der Abstand zwischen den Querabschnitten 17 der Außenhülse 10 und der Innenhülse 11 zu entnehmen, der die Verschiebbarkeit der Innenhülse 10 gegenüber der Außenhülse 12 schafft.

Schließlich lässt sich Fig. 3 entnehmen, dass die Innenhülse 11 zum weitgehend spielfreien Umgreifen eines Befestigungselementes einen durchgehenden Aufnahmekanal 19 umschließt.

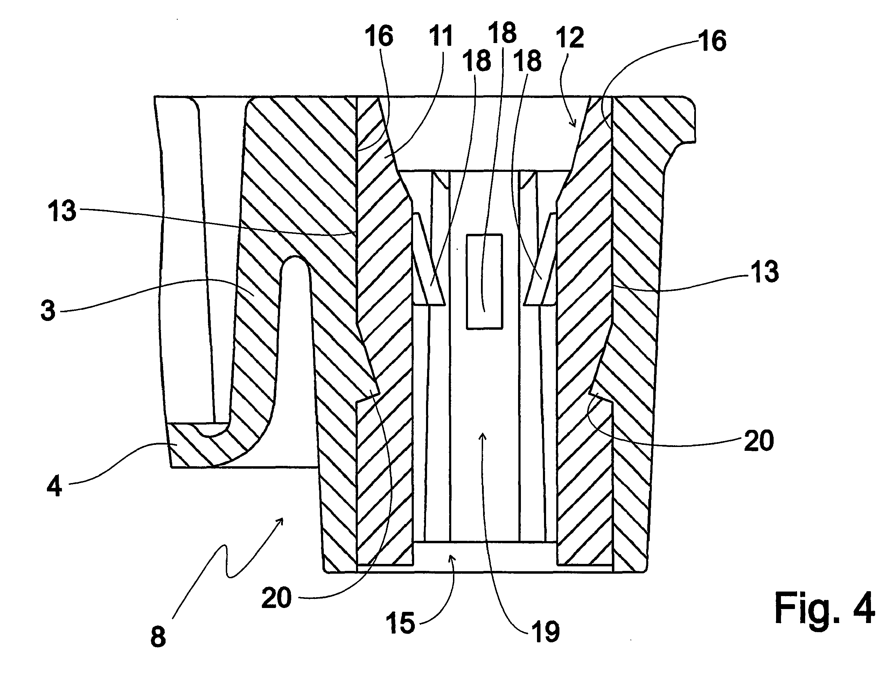

Fig. 4 zeigt in einem Schnitt in Querrichtung des Führungshohlraums 15 die zweite Verbindungseinheit 8 gemäß Fig. 2. Aus Fig. 4 ist ersichtlich, dass an den Längsabschnitten 16 der Innenwand der Außenhülse 10 Führungsvorsprünge 20 ausgebildet sind, die komplementär zu den Führungsausnehmungen 14 der Innenhülse 11 ausgebildet sind und in diese eingreifen. Dadurch ist die Innenhülse 11 gegen Herausfallen gesichert und bei ihrer Längsverschiebung geführt. Bei dem dargestellten Ausführungsbeispiel sind die Flanken der Führungsvorsprünge 20 zu einer in der Darstellung gemäß Fig. 4 oben liegenden Einführseite der Innenhülse 11 abgeflacht ausgebildet, um das Einführen derselben in die Außenhülse 10 und das Verrasten mit den Führungsvorsprüngen 20 zu erleichtern.

## Patentansprüche

1. Vorrichtung zum Befestigen wenigstens eines länglichen Gegenstandes an einem Grundteil über wenigstens zwei mit dem Grundteil verbundene Befestigungselemente mit einem Trägerteil (1) zur Aufnahme des oder jedes Gegenstandes; mit einer Verbindungseinheit (8), die über ein mit dem Trägerteil verbundenes feststehendes Führungsteil (9) und ein mit dem Führungsteil verschiebbar in Eingriff stehendes sowie mit einem Befestigungselement in Eingriff bringbares Aufnahmeteil (12) verfügt, und mit einer weiteren Verbindungseinheit (6), die mit einem weiteren Befestigungselement in Eingriff bringbar ist, **dadurch gekennzeichnet, dass** das Führungsteil (9) mit einer einen Führungshohlraum (15) umschließenden Außenhülse (10) ausgebildet ist, wobei der Führungshohlraum (15) einen Querschnitt aufweist, der in einer Längsrichtung größer als in einer Querrichtung ist, dass das Aufnahmeteil (12) über eine in dem Führungshohlraum (15) verschiebbare Innenhülse (11) verfügt, deren Durchmesser in Längsrichtung kleiner als der Durchmesser der Außenhülse (10) in Längsrichtung ist, und dass zwischen Wand ungen (16) des Führungsteils (9) und Wandungen (13) des Aufnahmeteils (12) Eingriffselemente (14, 20) ausgebildet sind, die miteinander in Eingriff sind.

2. Vorrichtung nach Anspruch 1, **dadurch gekennzeichnet, dass** die Eingriffselemente durch Führungsausnehmungen (14) und Führungsvorsprünge (20) gebildet sind, die sich in Längsrichtung erstrecken.

3. Vorrichtung nach Anspruch 2, **dadurch gekennzeichnet, dass** die Führungsvorsprünge (20) an Wandungen (16) des Führungsteils (9) und die Führungsausnehmungen (14) an Wandungen (13) des Aufnahmeteils (12) ausgebildet sind.

4. Vorrichtung nach Anspruch 2 oder Anspruch 3, **dadurch gekennzeichnet, dass** die Führungsvorsprünge (20) einen dreieckigen Querschnitt aufweisen, wobei eine in Aufsteckrichtung auf ein Befestigungselement dem Befestigungselement zugewandte Seite steiler als gegen die in Aufsteckrichtung dem Befestigungselement abgewandte Seite angestellt sind.

5. Vorrichtung nach einem der Ansprüche 1 bis 4, **dadurch gekennzeichnet, dass** Aufnahmeteil (12) einen durchgehenden Aufnahmekanal (19) umschließt und mit nach innen weisenden Rastnasen (18) ausgebildet ist.

6. Vorrichtung nach einem der Ansprüche 1 bis 5, **dadurch gekennzeichnet, dass** die weitere Verbindungseinheit (6) entsprechend der ein verschiebbares Aufnahmeteil (12) aufweisenden Verbindungseinheit (8) ausgebildet ist, wobei die Längsrichtungen der Aufnahmeteile (12) rechtwinklig zueinander ausgerichtet sind.

## Claims

1. Device for fastening at least one elongated object to a base part via at least two fastening elements connected to the base part, comprising a support part (1) for holding the or each object, comprising a connecting unit (8) which has a stationary guide part (9) connected to the support part and a receptacle part (12) which engages the guide part and is displaceable and can be made to engage a fastening element, and comprising a further connecting unit (6) which can be made to engage a further fastening element, **characterized in that** the guide part (9) is formed with an outer sleeve (10) enclosing a guide cavity (15), the guide cavity (15) having a cross-section which is greater in a longitudinal direction than in a transverse direction, **in that** the receptacle part (12) has an inner sleeve (11) which is displaceable in the guide cavity (15) and the diameter of which in the longitudinal direction is smaller than the diameter of the outer sleeve (10) in the longitudinal direction, and **in that** engagement elements (14, 20) are formed between walls (16) of the guide part (9) and walls (13) of the receptacle part (12), which engagement elements (14, 20) engage one another.

2. Device according to Claim 1, **characterized in that** the engagement elements are formed by guide recesses (14) and guide projections (20) which extend in the longitudinal direction.

3. Device according to Claim 2, **characterized in that** the guide projections (20) are formed on walls (16) of the guide part (9) and the guide recesses (14) are formed on walls (13) of the receptacle part (12).

4. Device according to Claim 2 or Claim 3, **characterized in that** the guide projections (20) have a triangular cross-section, a side facing a fastening element in the direction for pushing onto the fastening element being steeper than the side facing away from the fastening element in the direction for pushing on.

5. Device according to any of Claims 1 to 4, **characterized in that** the receptacle part (12) encloses a continuous receiving channel (19) and is formed with inward-pointing catches (18).

6. Device according to any of Claims 1 to 5, **characterized in that** the further connecting unit (6) is formed according to a connecting unit (8) having a displaceable receptacle part (12), the longitudinal directions of the receptacle parts (12) being oriented at right angles to one another.

## Revendications

1. Dispositif de fixation d'au moins un objet de forme allongée sur un élément de base par l'intermédiaire d'au moins deux organes de fixation raccordés à l'élément de base, comprenant un élément faisant office de support (1) pour le montage du ou de chaque objet ; comprenant une unité de raccordement (8) qui comporte un élément de guidage fixe (9) relié à l'élément faisant office de support et un élément formant logement (12) en prise d'engagement, avec la possibilité de se déplacer en translation, avec l'élément de guidage et pouvant être amené en prise d'engagement avec un organe de fixation et comprenant une autre unité de raccordement (6) qui peut être amenée en prise d'engagement avec un autre organe de fixation, **caractérisé en ce que** l'élément de guidage (9) est muni d'une douille extérieure (10) définissant une gabarit de guidage (15), la section transversale du gabarit de guidage (15) étant en l'occurrence plus grande dans le sens longitudinal que dans le sens transversal, **en ce que** l'élément formant logement (12) est muni d'une douille intérieure (11) pouvant être déplacée en translation dans le gabarit de guidage (15), dont le diamètre dans le sens longitudinal est plus petit que le diamètre de la douille extérieure (10) dans le sens longitudinal et **en ce qu'**il est prévu, entre les parois (16)de l'élément de guidage (9) et les parois (13) de l'élément formant logement (12), des organes d'accrochage (14, 20) qui sont en prise d'encastrement réciproque.

2. Dispositif selon la revendication 1, **caractérisé en ce que** les organes d'accrochage se présentent respectivement sous la forme d'évidements de guidage (14) et de saillies de guidage (20) qui s'étendent dans le sens longitudinal.

3. Dispositif selon la revendication 2, **caractérisé en ce que** les saillies de guidage (20) sont ménagées dans les parois (16) de l'élément de guidage (9) et les évidements de guidage (14) dans les parois (13) de l'élément formant logement (12).

4. Dispositif selon la revendication 2 ou la revendication 3, **caractérisé en ce que** les saillies de guidage (20) ont une section transversale de forme triangulaire, le côté orienté, dans le sens de l'emmanchement sur un organe de fixation, en direction de l'organe de fixation présentant en l'occurrence une pente plus raide comparativement au côté orienté, dans le sens de l'emmanchement, à l'opposé de l'organe de fixation.

5. Dispositif selon l'une des revendications 1 à 4, **caractérisé en ce que** l'élément formant logement (12) définit un gabarit de réception traversant (19) et qu'il est muni d'ergots d'accrochage (18) orientés vers l'intérieur.

6. Dispositif selon l'une des revendications 1 à 5, **caractérisé en ce que** les autres unités de raccordement (6) présentent une configuration correspondant à celle de l'unité de raccordement (8) munie d'un élément formant logement (12) déplaçable en translation, les directions longitudinales des éléments formant logement (12) étant en l'occurrence respectivement orientées selon une disposition en angle droit.
